# EUROPEAN PATENT SPECIFICATION

(11) **EP 1 353 019 B1**
(45) Date of publication and mention of the grant of the patent: **29.06.2011**
(21) Application number: 03006992.6
(22) Date of filing: 27.03.2003
(51) Int. Cl.: E04B 2/74

(54) **Modular structure for sectional partition walls formed of juxtaposed panels**
Modulare Struktur für eine aus nebeneinander liegenden Paneelen bestehende gegliederte Trennwand
Structure modulaire pour cloisons de séparation sectionnée formée de panneaux juxtaposés

(30) Priority: 10.04.2002 IT MI20020771
(43) Date of publication of application: 15.10.2003
(73) Proprietor: Unifor S.p.A., 22078 Turate (CO) (IT)
(72) Inventor: Molteni, Piero, 20122 Milan (IT)
(74) Representative: Di Giacomo, Roberta

(56) References cited:
- WO-A-89/02035
- GB-A- 1 378 300
- US-A- 3 190 407
- US-A- 4 036 371
- US-A- 5 431 210

## Description

The present invention generally relates to the field of office furnishings and, in particular, to the construction of sectional partition walls consisting of juxtaposed panels of the kind used in offices for the purpose of dividing and defining an office space into independent zones.

According to the known art, the construction of partitions of the aforementioned kind generally makes use of a supporting structure comprising interconnected uprights and cross members which rest on the floor of a space to be furnished and act as support for the panels in order to frame the same within the uprights and the cross members of the supporting structure. The panels are made from wooden, synthetic or composites materials or the like, and may exhibit a covering made of an aesthetically valuable material.

In known embodiments a device is provided for the interconnection of the cross members to the upright members. For instance, document WO 89/02035 A discloses a fastening device comprised of three sections, including a first section for insertion and attachment to one end of an upper upright member, a second section for insertion and attachment to one end of a lower upright member, and an intermediate section having a locking slot for connection of an end of a cross member. A problem with the device disclosed in this prior document is that it requires to be preassembled both in factory and on-site, before it can be used in the assembly of the panel supporting framework Clearly, this is undesirable because the pre-assembly of the device is time-consuming and therefore costly, let alone the fact that it is inconvenient for the user to perform such pre-assembly operation on-site. In another embodiment, known from document US-A-4 036 371, a coupling device is provided which is arranged between and attached to facing ends of two axially aligned column sections, and is provided with coupling means to which an end of a cross member can be releasably connected. A tension member is provided extending through the column section and engaging the inner surface thereof. Separate end members having screw means for engaging threaded bores in the tension member are included for maintaining the column sections in tight abutment with the coupling means. Although the coupling device is made of a unitary single piece, without requiring the preassembly of multiple pieces, the problem of the support structure disclosed in this prior art document is, in fact, that the tension member and the corresponding column member need to be preassembled in factory or on-site so they can be adapted to the various length of the columns before the support structure can be erected.

The present invention is aimed at obviating the above-mentioned disadvantages of conventional supporting structures for partition walls, and provides a novel supporting structure for sectional partition walls consisting of juxtaposed panels.

According to the present invention, the modular supporting structure is intended to support juxtaposed panels in order to form a sectional partition wall adapted to subdivide and to define a space to be used as office into independent working zones, and comprises a lower cross member, a plurality of intermediate cross members, an upper cross member and a plurality of upright spacers, each upright spacer connecting a pair of adjacently arranged cross members, and only one joining element being provided for the interconnection of each of said intermediate cross members to a lower and upper pair of upright spacers, respectively, at their point of concurrence, in order to form a supporting structure consisting of a framework of rectangular elementary cells intended to frame the juxtaposed panels, and is characterised in that:
- said joining element exhibits an intermediate circular cylindrical shank a flange-forming enlargement and a pair of threaded end portions extending from the lower and the upper portions, respectively, of the shank, and:
- each intermediate cross member exhibits a through hole at the free ends thereof which is intended to receive said joining element, and a depressed surface surrounding the upper and the lower openings of said through hole and forming an abutment surface for the flange-forming enlargement of the joining element when this is inserted in the respective hole, so as to allow the pair of threaded end portions extending from the lower and the upper portion, respectively, of the shank of the joining element to project from the lower and the upper opening, respectively, of the hole, in order to permit an associated upright spacer to be connected thereto.

The invention will now be described in more detail in relation to a preferred embodiment thereof, illustrated by way of example only and not limited thereto, illustrated in the accompanying drawings, wherein:
Figure 1 is an isometric projection view of a sectional partition wall formed of juxtaposed panels and made with the modular supporting structure according to the present invention;
Figure 2 is an isometric projection view of the modular supporting structure in the assembled condition;
Figure 3 is an isometric projection view of a modular supporting structure similar to that illustrated in Fig. 2, but having a different length;
Figure 4 is an isometric projection view of a modular supporting structure similar to that illustrated in Fig. 2, but having a different width;
Figure 5A is an isometric projection view of the modular supporting structure of Fig. 2, shown with its components in a partially disassembled condition;
Figure 5B is an isometric projection view of a portion of the modular supporting structure of Fig. 2 during the assembly of the partition wall forming panels; and
Figures 6 through 9 show the various assembling steps for forming of the modular supporting structure according to the invention.

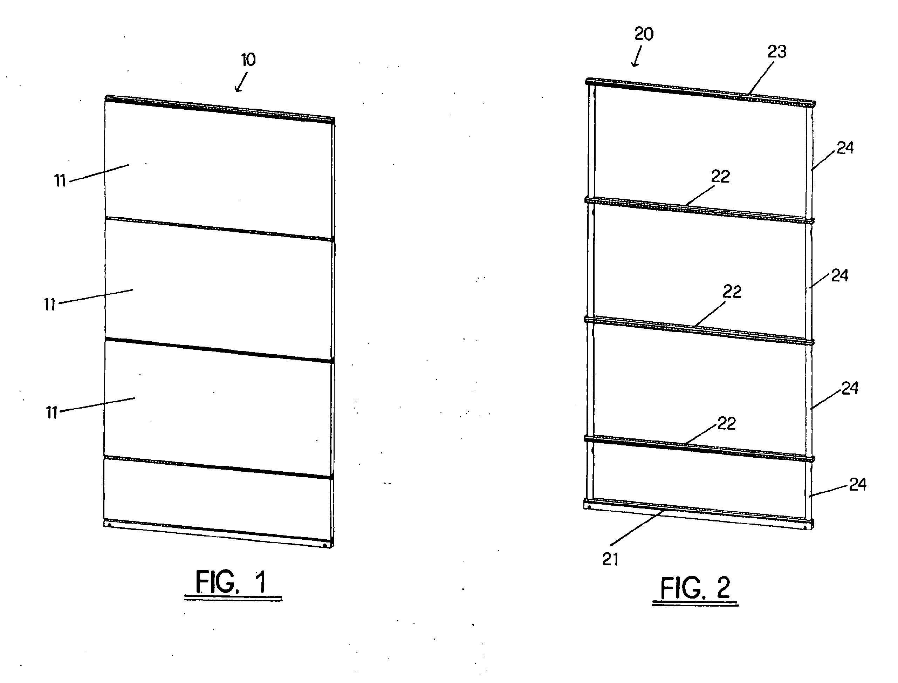

Figure 1 of the drawings illustrates a sectional partition wall member 10 intended to be joined together with other similar members, not shown in the Figure, in order to form a wall adapted to subdivide an interior space to be used as an office according to specific functional and aesthetical criteria. Such a partition wall member is formed in a manner known per se, by juxtaposing several decorative panels 11.

For supporting the panels 11 of the sectional partition wall member 10, according to this invention, there is provided an improved modular supporting structure, generally designated by 20 in Figure 2. This supporting structure 20 comprises a lower cross member 21, one or more intermediate cross members 22, an upper cross member 23 and a plurality of upright spacers 24. The lower cross member 21, the intermediate cross members 22, the upper cross member 23 and the upright spacers 24 are joined together at their point of concurrence in a manner which will be described hereunder, in order to form a framework intended to frame the juxtaposed decorative panels 11 which form the modular partition wall 10. In virtue of the fact that the cross members 21,22,23 and the spacers 24 are joined together in order to form a framework consisting of a plurality of rectangular elementary cells having measures which are independent from the overall dimensions of the sectional partition wall 10, the modular supporting structure 20 of the present invention exhibits a greater rigidity than the known supporting structures for forming sectional partition walls.

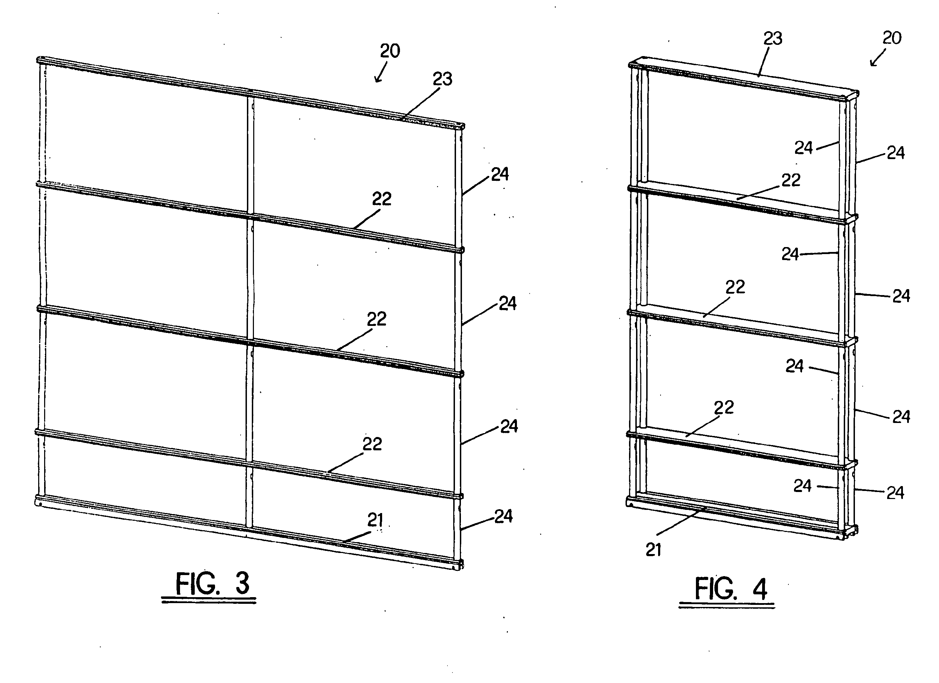

With reference to Figures 3 and 4 of the drawings, there are illustrated two possible variants of the modular supporting structure 20 in accordance with the present invention. By observing these variants, one can see that they differ in that the length and width of the cross members 21,22,23 and the number of spacers 24 are different. It is possible to erect supporting structures of different dimensions by suitably choosing the length and width of the cross members and the number of spacers while maintaining unchanged however the characteristics of rigidity of the supporting structure which are given by the interconnecting of the cross members and the spacers to form a plurality of rectangular elementary cells.

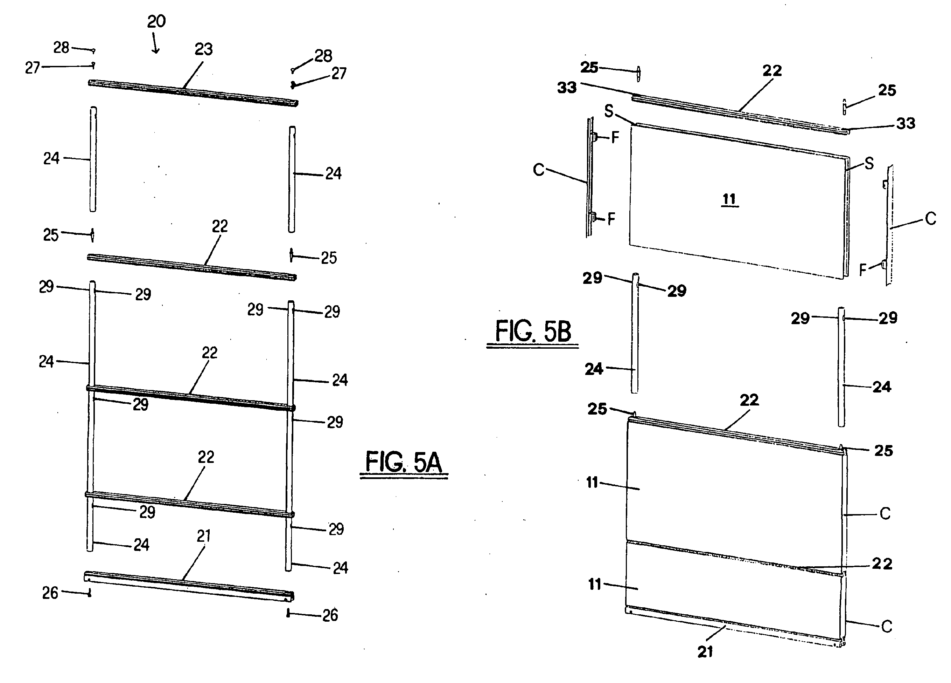

In Fig. 5A of the drawings, there is shown the arrangement by which the lower cross member 21, the intermediate cross members 22, the upper cross member 23, the upright spacers 24 are joined together to form the sectional partition wall 10 shown in Fig. 1. For a better understanding of the means by which the interconnection of the cross members and the spacers is realised, the illustration of the decorative panels 11 forming the partition wall member 10 has been omitted. For the interconnection of the intermediate cross members 22 and the upright spacers 24 a special joining element, generally designated by 25, is used, whereas for the interconnection of the lower cross member 21 and the upper cross member 23 to the upright spacers 24 ordinary connection means, e.g. screws, are used which are generally indicated as 26 and 27, respectively.

Figure 5B illustrates the arrangement by which the decorative panels 11 are joined together with the lower cross member 21, the intermediate cross member 22, the upper cross member 23 and the spacers 24 to form the sectional partition wall 20. As can be seen, in the smaller vertical sides of each decorative panel 11 a groove S is formed which extends throughout the length of the smaller side of the decorative panel and is intended to receive inside an upright spacer 24. The groove S is then closed by a covering element C which is fixed to the upright spacer 24, for example by means of a snap clip F, so that the upright spacer 24 is concealed from view.

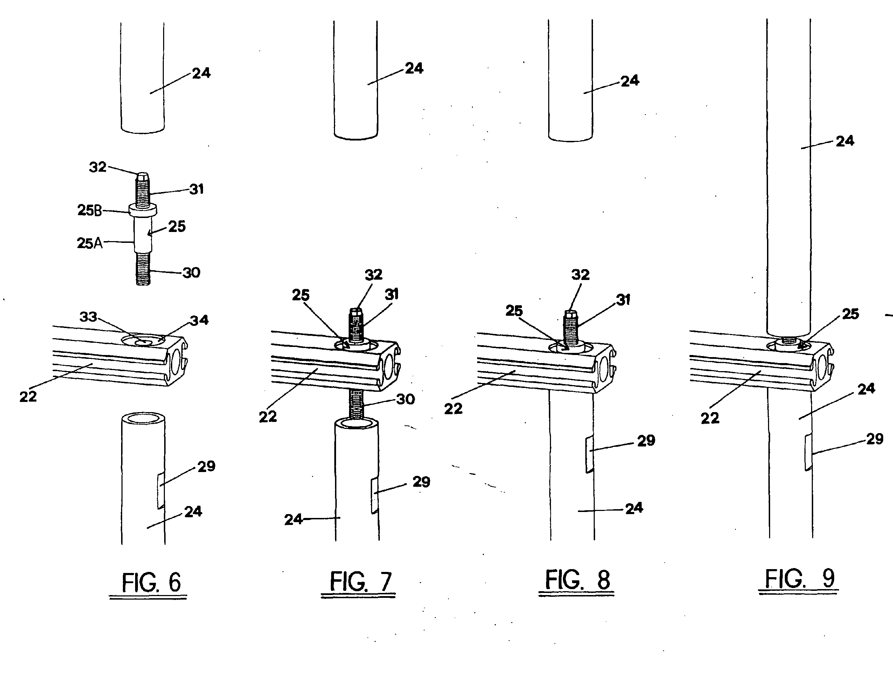

With reference to Figures 6 to 9 of the drawings, there is shown in greater detail the joining element 25. This joining element 25 is substantially formed by a smooth circular cylindrical shank 25A having a flange-forming enlargement 25B and a pair of threaded end portions 30,31 extending from the lower portion and the upper portion of the shank 25A of the joining element, respectively. The free end of the threaded end portion 31 terminates in a hexagonal head portion 32 in order to permit it to be operated by means of a tool as described in the following.

Again in Figures 6 to 9, it can be seen that the cross members 22 are provided with a through hole 33 made at each end thereof which is intended to receive the shank 25A of the joining element 25. The upper and lower opening of the hole 33 are located in a depressed surface 34 made on the upper and lower sides of the intermediate cross member 22. This depressed surface 34 acts as an abutment surface for the flange 25B of the joining element 25 thus permitting the shank 25A of the joining element 25 to be retained inside the hole 33 so that the lower 30 and the upper 31 threaded end portions project from the upper and the lower side, respectively, of the free ends of the cross member 22. Since the shank 25A of the joining element 25 is smooth, the joining element 25 is lodged in the hole 33 with the possibility to turn around its longitudinal axis. The depressed surface 34 further acts as an abutment surface also for the end portion of the upright spacers 24 connected to the associated intermediate cross member 22. A similar depressed surface 34 is made also on the upper side of the lower cross member 21 and in the lower side of the upper cross member 23 at the free ends thereof, in order to act as abutment surface for the end portions of the upright spacers 24 connected to said cross members 21,23.

The upright spacers 24 are provided with a threaded hole at both the lower and the upper end portions which is adapted to receive the lower 30 and upper 31 threaded end portions, respectively, of the joining element 25. Moreover, on the outer surface at the upper end portion of the upright spacer a pair of oppositely arranged plane surfaces 29 are formed which are adapted to be operated by means of a suitable tool as described in the following.

The assembly of the modular supporting structure 20 and the decorative panels 11 forming the sectional partition wall element 10 is performed in the following steps.

In a first step, a first pair of joining elements 25 is inserted from the top into the holes 33 made in the free ends of a first intermediate cross member 22 until the flange 25B of the shank 25A of each joining element 25 comes to a rest against the depressed abutment surface 34 surrounding the upper opening of the holes 33, as shown in Figures 6 and 7 of the drawings. In this condition, the lower and the upper threaded end portions 30 and 31, respectively, of the first pair of joining elements 25 project from the lower and the upper openings, respectively, of the holes 33 in the free ends of the intermediate cross member 22 so that a pair of lower and upper upright spacers 24 can be connected thereto.

In a second step, a pair of lower upright spacers 24 is connected to the lower threaded end portions 30 of the first pair of joining elements 25 assembled on the first intermediate cross member 22 by means of a suitable tool, by acting on the hexagonal head portion 32 of each upper threaded end portion 31 of the first pair of joining elements 25 as shown in Figures 7 and 8.

In a third step, a pair of upper upright spacers 24 is joined to the upper threaded end portions 31 of the first pair of joining elements 25 assembled on the first intermediate cross member 22 by means of a suitable tool, by acting on the oppositely arranged plane surfaces 29 of each upright spacer 24 as shown in Fig. 9.

In a fourth step, a first decorative panel 11 is inserted between the pair of upper upright spacers 24 connected to the first intermediate cross member 22, by passing the upper pair of upright spacers 24 within the corresponding grooves S obtained in the smaller vertical sides of the first decorative panel 11, and then the grooves S are closed by applying the covering elements C to the upright spacers 24, so as to concealed them from view.

In a fifth step, a second intermediate cross member 22 is connected to the pair of upright spacers 24 which have been previously connected to the first intermediate cross member 22 by inserting a second pair of joining elements 25 into the holes 33 in the free ends of the second intermediate cross member 22 and by screwing the lower threaded end portions 30 of each joining element 25 in the holes provided in the upright spacers 24, in order to connect the second intermediate cross member 22 to said the pair of upright spacers 24, and thus frame the first decorative panel 11.

Thereafter, the operation described in the third, fourth and fifth steps, respectively, is repeated for all the other intermediate cross members 22 concerned.

In a sixth step, a lower decorative panel 11 is inserted between the lower pair of upright spacers 24 which are connected to the lowest intermediate cross member 22 and the lower cross member 21 is connected to said pair of upright spacers 24 by means of the screws 26, so as to frame the decorative panel 11 which is at the base of the sectional partition wall 10.

In a seventh and last step, an upper decorative panel 11 is inserted between the upper pair of upright spacers 24 which are connected to the highest intermediate cross member 22, and the upper cross member 23 is connected to the upper pair of upright spacers 24 by means of the screws 27, and then the screw caps 28 are applied thereon, so as to conceal the screws from view. Thus, also the decorative panel 11 at the top of the sectional partition wall 10 is framed.

From the foregoing it is apparent how the modular supporting structure in accordance with the present invention allows a sectional partition wall of different, even comparatively big dimensions to be erected without prejudice of the rigidity of the wall, and this is achieved in a comparatively simple and economic way, since all decorative panels forming such wall are framed by cross members and spacers fixedly connected together to form a framework of rectangular elementary cells.

## Claims

1. Modular supporting structure (20), intended to support juxtaposed panels (11) in order to form a sectional partition wall (10) adapted to subdivide and to define a space to be used as office into independent working zones, comprising a lower cross member (21), a plurality of intermediate cross members (22), an upper cross member (23) and a plurality of upright spacers (24), each upright spacer (24) connecting a pair of adjacently arranged cross members (21,22,23), and only one joining element (25) being provided for the interconnection of each of said intermediate cross members (22) to a lower and upper pair of upright spacers (24), respectively, at their point of concurrence, in order to form a supporting structure consisting of a framework of rectangular elementary cells intended to frame the juxtaposed panels (11), **characterised in that**:
- said joining element (25) exhibits an intermediate circular cylindrical shank (25A) having a flange-forming enlargement (25B) and a pair of threaded end portions (30,31) extending from the lower and the upper portions, respectively, of the shank (25A) of the joining element (25), and
- each intermediate cross member (22) exhibits a through hole (33) at the free ends thereof which is intended to receive said joining element (25), and a depressed surface (34) surrounding the upper and the lower openings of said through hole (33) and forming an abutment surface for the flange-forming enlargement (25B) of the joining element (25) when this is inserted in the respective hole (33), so as to allow the pair of threaded end portions (30,31) extending from the lower and the upper portion, respectively, of the shank (25A) of the joining element (25) to project from the lower and the upper opening, respectively, of the hole (33), in order to permit an associated upright spacer (24) to be connected thereto.

2. Modular supporting structure according to claim 1, **characterised in that** the upright spacers (24) exhibit a threaded hole at each end portion thereof which is intended to receive the lower (30) and upper (31) threaded end portion, respectively, of the joining element (25).

3. Modular supporting structure according to claim 2, **characterised in that**, in order to permit the lower threaded end portion (30) of the joining element (25) to be screwed in the hole made in the upper end of an upright spacer (24), a hexagonal head portion (32) is provided at the upper end of the upper threaded end portion (31) of said joining element (25) for operation by a suitable tool.

4. Modular supporting structure according to claim 2, **characterised in that**, in order to permit the upper threaded end portion (31) of the joining element (25) to be screwed in the hole made in lower end of an upright spacer (24), a pair of oppositely arranged plane surfaces (29) are provided on the outer surface of the upright spacer (24), preferably in its upper portion, for operation by a suitable tool.

5. Modular supporting structure according to claim 1, **characterised in that** it comprises at least one said panel, each panel (11) exhibiting a groove (S) cut in its smaller vertical sides, extending throughout the length of said smaller vertical side, and intended to accommodate an upright spacer (24).

6. Modular supporting structure according to claim 5, **characterised in that**, in order to conceal from view the upright spacer (24) accommodated in the groove (S), a covering element (C) is provided which is intended to be attached to the upright spacer (24) by means of snap-fastening means (F).

7. Modular supporting structure according to claim 1, **characterised in that** the lower cross member (21) exhibits a pair of through holes at its free ends to which a pair of upper upright spacers (24) are connected by means of screws (26) inserted in said holes.

8. Modular supporting structure according to claim 1, **characterized in that** the upper cross member (23) exhibits a pair of through holes at its free ends to which a pair of lower upright spacers (24) are connected by means of screws (27) inserted in said holes, a covering element (28) being also provided for said screws (27) so as to conceal them from view.

## Patentansprüche

1. Modulare Halterungsstruktur (20), die zum Haltern von nebeneinander angeordneten Paneelen (11) vorgesehen ist, um eine aus Abschnitten geformte Trennwand (10) zu bilden, die dazu angepasst ist, einen als Büro zu verwendenden Raum in voneinander unabhängige Arbeitsbereiche zu unterteilen bzw. festzulegen, wobei diese ein unteres Querglied (21), eine Mehrzahl von Zwischenquergliedern (22), ein oberes Querglied (23) sowie eine Mehrzahl von aufrechten Abstandhaltern (24) umfasst, wobei jeder aufrechte Abstandhalter (24) ein Paar von benachbart angeordneten Quergliedern (21, 22, 23) miteinander verbindet, und wobei nur ein Verbindungselement (25) vorgesehen ist, um jedes der Zwischenquerglieder (22) mit einem unteren bzw. oberen Paar von aufrechten Abstandhaltern (24) an der Stelle zu verbinden, an welcher sie aufeinander treffen, um eine Halterungsstruktur zu bilden, die aus einem aus rechteckigen Elementarzellen geformten Rahmenwerk gebildet ist, welches zum Einrahmen der nebeneinander angeordneten Paneele (11) vorgesehen ist, **dadurch gekennzeichnet, dass**:
- das Verbindungselement (25) einen kreiszylinderförmigen Zwischenschaft (25A) aufweist, der eine flanschförmige Erweiterung (25B) und ein Paar mit Gewinde versehene Endabschnitte (30, 31) aufweist, die von dem oberen bzw. unteren Abschnitt des Schafts (25A) des Verbindungselements (25) ausgehen, und
- jedes Zwischenquerglied (22) an seinen freien Enden ein Durchloch (33) aufweist, welches zum Aufnehmen des Verbindungselements (25) vorgesehen ist, sowie eine vertiefte Fläche (34), welche die oberen und unteren Öffnungen des Durchlochs (33) umgibt und eine Anlagefläche für die flanschförmige Erweiterung (25B) des Verbindungselements (25) bildet, wenn dieses in das jeweilige Loch (33) eingesetzt ist, um es dem Paar von mit Gewinde versehenen Endabschnitten (30, 31), welche von dem unteren bzw. oberen Abschnitt des Schafts (25A) des Verbindungselements (25) ausgehen, zu erlauben, aus der unteren bzw. oberen Öffnung des Lochs (33) herauszuragen, um zuzulassen, dass ein zugeordneter, aufrechter Abstandhalter (24) mit diesem verbunden wird.

2. Modulare Halterungsstruktur gemäß Anspruch 1, **dadurch gekennzeichnet, dass** die aufrechten Abstandhalter (24) an jedem ihrer Endabschnitte ein mit Gewinde versehenes Loch aufweisen, welches zum Aufnehmen des unteren mit Gewinde versehenen Endabschnitts (30) bzw. oberen mit Gewinde versehenen Endabschnitts (31) des Verbindungselements (25) vorgesehen ist.

3. Modulare Halterungsstruktur gemäß Anspruch 2, **dadurch gekennzeichnet, dass** am oberen Ende des oberen mit Gewinde versehenen Endabschnitts (31) des Verbindungselements (25) ein sechseckiger Kopfabschnitt (32) vorgesehen ist, um zuzulassen, dass der untere mit Gewinde versehene Endabschnitt (30) des Verbindungselements (25) unter Verwendung eines geeigneten Werkzeugs in das im oberen Ende eines aufrechten Abstandhalters (24) angebrachte Loch geschraubt wird.

4. Modulare Halterungsstruktur gemäß Anspruch 2, **dadurch gekennzeichnet, dass** an der Außenfläche des aufrechten Abstandhalters (24), und zwar vorzugsweise in seinem oberen Abschnitt, ein Paar von einander gegenüberliegend angeordneten, ebenen Flächen (29) vorgesehen ist, um zuzulassen, dass der obere mit Gewinde versehene Endabschnitt (31) des Verbindungselements (25) unter Verwendung eines geeigneten Werkzeugs in das im unteren Ende eines aufrechten Abstandhalters (24) angebrachte Loch geschraubt wird.

5. Modulare Halterungsstruktur gemäß Anspruch 1, **dadurch gekennzeichnet, dass** sie wenigstens eines der Paneele umfasst, wobei jedes Paneel (11) eine in seine kürzere vertikale Seite geschnittene Nut (S) aufweist, die sich über die gesamte Länge der kürzeren vertikalen Seite erstreckt und dazu vorgesehen ist, einen aufrechten Abstandhalter (24) aufzunehmen.

6. Modulare Halterungsstruktur gemäß Anspruch 5, **dadurch gekennzeichnet, dass** zum Verdecken des in der Nut (S) aufgenommen, aufrechten Abstandhalters (24) ein Abdeckelement (C) vorgesehen ist, welches dazu bestimmt ist, mittels Schnappbefestigungsmitteln (F) an dem aufrechten Abstandhalter (24) befestigt zu werden.

7. Modulare Halterungsstruktur gemäß Anspruch 1, **dadurch gekennzeichnet, dass** das untere Querglied (21) ein Paar von Durchlöchern aufweist, und zwar an seinen freien Enden, die mittels in den Löchern eingesetzten Schrauben (26) mit einem Paar von oberen, aufrechten Abstandhaltern (24) verbunden werden.

8. Modulare Halterungsstruktur gemäß Anspruch 1, **dadurch gekennzeichnet, dass** das obere Querglied (23) ein Paar von Durchlöchern aufweist, und zwar an seinen freien Enden, die mittels in den Löchern eingesetzten Schrauben (27) mit einem Paar von unteren, aufrechten Abstandhaltern (24) verbunden werden, wobei zum Verdecken der Schrauben (27) ferner ein Abdeckelement (28) vorgesehen ist.

## Revendications

1. Structure de support modulaire (20), destinée à supporter des panneaux juxtaposés (11) afin de former une cloison de séparation à éléments (10) apte à subdiviser et définir un espace à utiliser comme bureau dans des zones de travail indépendantes, comprenant un élément transversal inférieur (21), une pluralité d'éléments transversaux intermédiaires (22), un élément transversal supérieur (23) et une pluralité d'écarteurs verticaux (24), chaque écarteur vertical (24) reliant une paire d'éléments transversaux (21, 22, 23) adjacents les uns aux autres, et un seul élément de jonction (25) étant prévu pour l'interconnexion de chacun desdits éléments transversaux intermédiaires (22) à une paire inférieure et supérieure d'écarteurs verticaux (24), respectivement, à leur point de coïncidence, afin de former une structure de support consistant en un châssis de cellules élémentaires rectangulaires destiné à encadrer les panneaux juxtaposés (11), **caractérisée en ce que** :
- ledit élément de jonction (25) présente une tige cylindrique circulaire intermédiaire (25A) comportant un agrandissement formant rebord (25B) et une paire de parties d'extrémité filetées (30, 31) s'étendant depuis les parties inférieure et supérieure, respectivement, de la tige (25A) de l'élément de jonction (25), et
- chaque élément transversal intermédiaire (22) présente un trou traversant (33) à ses extrémités libres, qui est destiné à recevoir ledit élément de jonction (25), et une surface déprimée (34) entourant les ouvertures supérieure et inférieure dudit trou traversant (33) et formant une surface de butée pour l'agrandissement formant rebord (25B) de l'élément de jonction (25) lorsque celui-ci est inséré dans le trou respectif (33), afin de permettre à la paire de parties d'extrémité filetées (30, 31) s'étendant depuis la partie inférieure et supérieure, respectivement, de la tige (25A) de l'élément de jonction (25) de saillir de l'ouverture inférieure et supérieure, respectivement, du trou (33), afin de permettre à un écarteur vertical associé (24) d'y être relié.

2. Structure de support modulaire selon la revendication 1, **caractérisée en ce que** les écarteurs verticaux (24) présentent un trou taraudé à chaque partie de leurs extrémités, qui est destiné à recevoir la partie d'extrémité filetée inférieure (30) et supérieure (31), respectivement, de l'élément de jonction (25).

3. Structure de support modulaire selon la revendication 2, **caractérisée** sen ce que, pour permettre à la partie d'extrémité filetée inférieure (30) de l'élément de jonction (25) d'être vissée dans le trou ménagé dans l'extrémité supérieure d'un écarteur vertical (24), est prévue une partie de tête hexagonale (32) à l'extrémité supérieure de la partie d'extrémité filetée supérieure (31) dudit élément de jonction (25) pour actionnement par un outil approprié.

4. Structure de support modulaire selon la revendication 2, **caractérisée en ce que**, pour permettre à la partie d'extrémité filetée supérieure (31) de l'élément de jonction (25) d'être vissée dans le trou ménagé dans l'extrémité inférieure d'un écarteur vertical (24), sont prévues une paire de surfaces planes opposées (29) sur la surface externe de l'écarteur vertical (24), de préférence dans sa partie supérieure, pour actionnement par un outil approprié.

5. Structure de support modulaire selon la revendication 1, **caractérisée en ce qu'**elle comprend au moins undit panneau, chaque panneau (11) présentant une rainure (S) découpée dans ses petits côtés verticaux, s'étendant sur toute la longueur dudit petit côté vertical, et destinée à loger un écarteur vertical (24).

6. Structure de support modulaire selon la revendication 5, **caractérisée en ce que**, pour dissimuler l'écarteur vertical (24) logé dans la rainure (S), un élément couvrant (C) est prévu, qui est destiné à être fixé à l'écarteur vertical (24) par un moyen d'encliquetage (F).

7. Structure de support modulaire selon la revendication 1, **caractérisée en ce que** l'élément transversal inférieur (21) présente une paire de trous traversants à ses extrémités libres à laquelle une paire d'écarteurs verticaux supérieurs (24) est reliée au moyen de vis (26) insérées dans lesdits trous.

8. Structure de support modulaire selon la revendication 1, **caractérisée en ce que** l'élément transversal supérieur (23) présente une paire de trous traversants à ses extrémités libres à laquelle une paire d'écarteurs verticaux inférieurs (24) est reliée au moyen de vis (27) insérées dans lesdits trous, un élément couvrant (28) étant également prévu pour lesdites vis (27) afin de les dissimuler.
